# EUROPEAN PATENT SPECIFICATION

(11) **EP 3 381 141 B1**
(45) Date of publication and mention of the grant of the patent: **14.10.2020**
(21) Application number: 17743795.1
(22) Date of filing: 11.01.2017
(51) Int. Cl.: H04L 1/24, H04B 17/24, H04L 1/20

(54) **UTILIZING KNOWN DATA FOR STATUS SIGNALING**
VERWENDUNG VON BEKANNTEN DATEN ZUR STATUSSIGNALISIERUNG
UTILISATION DE DONNÉES CONNUES POUR SIGNALISATION D'ÉTAT

(30) Priority: 25.01.2016 US 201662286930 P; 02.04.2016 US 201662317509 P; 01.06.2016 US 201662343874 P
(43) Date of publication of application: 03.10.2018
(73) Proprietor: Valens Semiconductor Ltd., 45240 Hod Hasharon (IL)
(72) Inventor: LIDA, Eyran, 73134 Kfar Ha-Oranim (IL); SALAMON, Aviv, 43563 Raanana (IL)
(74) Representative: Dallimore, Geoffrey Robert
(86) International application number: PCT/IB2017/050138
(87) International publication number: WO 2017/130071

(56) References cited:
- WO-A1-00/13348
- US-A1- 2007 021 091
- US-A1- 2007 140 361
- US-A1- 2015 222 384
- US-A1- 2015 356 052
- US-B1- 6 275 678
- US-B1- 8 320 411

## Description

### BACKGROUND

Status signaling is usually used to control transceiver functions and monitor health and status information. However, status signaling requires a working communication link, and the prior art references do not disclose a mechanism that enables status signaling when one or both of the link partners are at bad operating points that do not enable them to receive data.

US 2015/356052 describes a method for seamless addition of high-bandwidth, inter-chip communication lanes by: sending an idle sequence over the new lanes in parallel to sending and receiving data over the active high bandwidth lanes; sending in parallel a synchronization sequence and a known non-idle sequence during an inter packet gap; utilizing the known non-idle sequence for deskewing the new high bandwidth lanes; and sending a transition sequence.

### SUMMARY

In a first aspect, the present invention provides a communication system configured to utilize transmissions of known sequences to indicate quality of operating points according to claim 1.

In a second aspect, the present invention provides a method for utilizing transmission of known sequences to indicate qualities of operating points of first and second transceivers according to claim 11.

### BRIEF DESCRIPTION OF THE DRAWINGS

The embodiments are herein described by way of example only, with reference to the accompanying drawings. No attempt is made to show structural details of the embodiments in more detail than is necessary for a fundamental understanding of the embodiments. In the drawings:
FIG. 1 illustrates a communication system that utilizes transmissions of known sequences to indicate quality of operating points; and
FIG. 2 illustrates one embodiment of a mode-conversion canceller that utilizes known data for fast convergence.

### DETAILED DESCRIPTION

In one embodiment, a transceiver receives an indication from its link partner that the partner is at a bad operating point. As a result, the transceiver starts to transmit first known data for at least a first predefined minimum period, and then transmits a signal that indicates that its receiver (the receiver of the transmitter) is at a good operating point. The link partner is configured to operate in a similar manner when the link partner receives an indication from the transceiver that the transceiver is at a bad operating point. The link partner starts to transmit second known data for at least a second predefined minimum period, and then transmits a signal that indicates that its receiver (the receiver of the link partner) is at a good operating point.

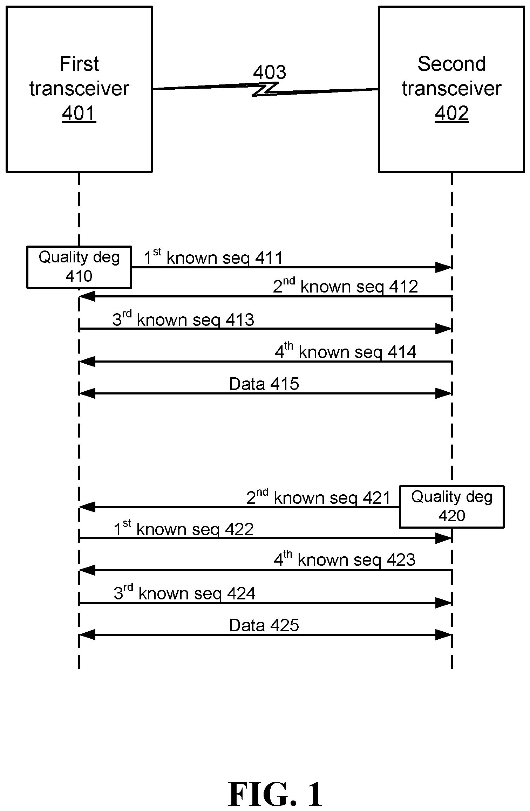

FIG. 1 illustrates a communication system that utilizes transmissions of known sequences to indicate quality of operating points. The system includes a first transceiver 401 and a second transceiver 402, which communicate over a communication channel 403. Responsive to identifying a quality degradation in the operating point it is at, the first transceiver 401 transmits a first known sequence, for a first duration. Then, responsive to receiving the first known sequence, the second transceiver 402 replies with a second known sequence, for a second duration, responsive to receiving the first known sequence; wherein each of the first and second durations is longer than the round trip delay between the first and second transceivers. And responsive to identifying a quality degradation in the operating point of the second transceiver 402, the second transceiver 402 transmits the second known sequence for the second duration, and then the first transceiver 401 replies with the first known sequence for the first duration.

The communication system may feature various options. Optionally, the first transceiver utilizes the second known sequence to recover from its quality degradation faster than it could recover without receiving the second known sequence. Additionally, the second transceiver may utilize the first known sequence to recover from its quality degradation faster than it could recover without receiving the first known sequence. According to another option, the first and second transceivers utilize the first and second known sequences, respectively, to recover from their quality degradations within less than 1 millisecond from the occurrence of the quality degradations. In one example, the meaning of recovering from a quality degradation is that the communication system is able to successfully exchange data according to its expected performance. According to still another option, the first and second transceivers utilize the first and second known sequences, respectively, to recover from their quality degradations within less than 50 microseconds from the occurrence of the quality degradations.

Optionally, the first transceiver transmits a third known sequence after recovering from its quality degradation, and the second transceiver transmits a fourth known sequence after recovering from its quality degradation. Optionally, the first, second, third, and fourth known sequences are different. Additionally, the first and second transceivers may include first and second scramblers, respectively; the first scrambler is known to the second transceiver, the second scrambler is known to the first transceiver, and the first, second, third, and fourth known sequences are based on the scramblers. Additionally or alternatively, the first and second known sequences may be bitwise-complement-code-words of the idle sequences sent by the first and second transceivers, respectively, and each bitwise-complement-code-word may appear in the idle sequence. Optionally, the third and fourth known sequences are the idle sequences sent by the first and second transceivers, respectively. And according to another option, the second transceiver starts transmitting data only after receiving the third known sequence, and the first transceiver starts transmitting data only after receiving the fourth known sequence.

Optionally, the duration from identifying the quality degradation in the operating point of the first transceiver to the initiation of the transmission of the first known sequence is shorter than the duration required for the first transceiver to send a nominal data packet. Additionally, the first transceiver may initiate the transmission of the first known sequence in the middle of transmitting a data packet. According to another option, the duration from receiving the first known sequence to the initiation of the transmission of the second known sequence is shorter than the duration required for the second transceiver to send a nominal data packet. Additionally, the second transceiver may initiate the transmission of the second known sequence in the middle of transmitting a data packet.

Optionally, the first and second durations are predetermined and equal. Optionally, both the first and second durations are longer than 0.1 microseconds and shorter than 500 microseconds. And optionally, both the first and second durations are longer than 0.1 microseconds and shorter than 20 microseconds.

In one example, the quality degradations result from mode-conversion of common mode signals; and while suffering from the quality degradations, the first and second transceivers do not meet their expected performances. In this example, the quality degradation in the operating point of the first transceiver may result from a mode-conversion of a common mode signal, and while suffering from the quality degradation the first transceiver does not meet its expected performance. Additionally or alternatively, the quality degradation in the operating point of the second transceiver may result from a mode-conversion of a common mode signal, and while suffering from the quality degradation the second transceiver does not meet its expected performance.

The communication system may further include a retransmission module to request transmission of packets that could not be transmitted while at least one of the first and second transceivers have not recovered from their quality degradations. And optionally, the first and second transceivers communicate over a differential communication channel that transmits data at a rate above 500 Mbps.

In one embodiment, a method for utilizing transmission of known sequences to indicate qualities of operating points of first and second transceivers that communicate over a communication channel includes the following steps: In step 1, transmitting, by the first transceiver upon identifying a quality degradation in its operating point, a first known sequence for a first duration. In step 2, replying, by the second transceiver upon receiving the first known sequence, with a second known sequence for a second duration; wherein each of the first and second durations is longer than the round trip delay between the first and second transceivers. And in step 3, transmitting, by the second transceiver upon identifying a quality degradation in its operating point, the second known sequence for the second duration, and replying, by the first transceiver, with the first known sequence for the first duration.

The method optionally further includes the step of transmitting, by the first transceiver, a third known sequence after recovering from its quality degradation, and transmitting, by the second transceiver, a fourth known sequence after recovering from its quality degradation. Optionally, the method further includes the step of transmitting data, by the second transceiver, only after receiving the third known sequence, and transmitting data, by the first transceiver, only after receiving the fourth known sequence.

The method may optionally include the following step of utilizing, by the first transceiver, the second known sequence for recovering from its quality degradation faster than it could recover without receiving the second known sequence. Additionally or alternatively, the method further includes utilizing, by the second transceiver, the first known sequence for recovering from its quality degradation faster than it could recover without receiving the first known sequence. Optionally, the method further includes the step of utilizing, by the first and second transceivers the first and second known sequences, respectively, for recovering from their quality degradations within less than 1 millisecond from the occurrence of the quality degradations. According to another option, the method further includes the step of utilizing, by the first and second transceivers, the first and second known sequences, respectively, for recovering from their quality degradations within less than 50 microseconds from the occurrence of the quality degradations.

In one example, the duration from identifying the quality degradation in the operating point of the first transceiver to start transmitting the first known sequence is shorter than the duration required for the first transceiver to send a packet. And optionally, the method further includes the step of transmitting packets that could not be transmitted while at least one of the first and second transceivers have not recovered from their quality degradations.

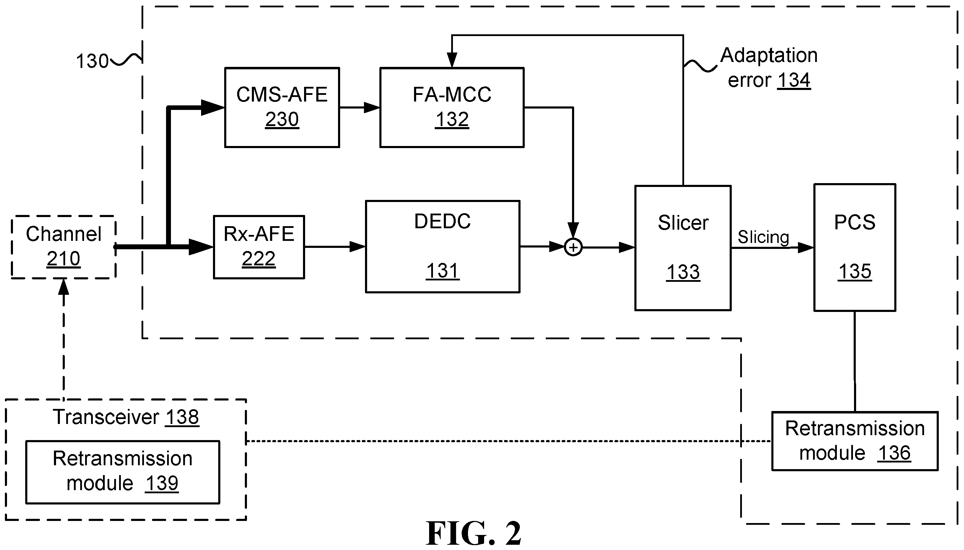

FIG. 2 illustrates one embodiment of a mode-conversion canceller that utilizes known data for fast convergence. The embodiment includes a transceiver 130 that includes the following elements: a receiver analog front end (Rx-AFE 222) and a common mode sensor AFE (CMS-AFE 230) coupled to a differential communication channel 210 that is coupled to a second transceiver 138. The Rx-AFE 222 feeds the received differential signal to a digital equalizer and/or a digital canceller (DEDC 131). The CMS-AFE 230 extracts a digital representation of a common mode signal of a received differential signal, and forwards it to a fast-adaptive mode-conversion canceller (FA-MCC 132) that generates a compensation signal to mitigate differential interference. It is noted that the compensation signal mitigates the differential interference when the compensation signal cancels at least some of the effect of the differential interference to an extent that enables the transceiver to meet its expected performance. For example, if the transceiver is expected to support a throughput of above 200 Mb/s, then the compensation signal mitigates the differential interference when the transceiver is able to support the 200 Mb/s throughput, and does not mitigate the differential interference when the transceiver is unable to support the 200 Mb/s throughput.

Responsive to receiving an indication that a serious differential interference has occurred, the transceiver 130 indicates the second transceiver 138 to transmit known data. The transceiver 130 utilizes the known data to improve the accuracy of its slicing errors (meaning, in some cases, to reduce the slicing errors), which enables rapid adaptation of the FA-MCC 132 to a level that mitigates the serious differential interference to an extent that enables a retransmission module 136 to request retransmission of erred packets fast enough to maintain a fixed rate of data transmission over a 2-millisecond window.

Optionally, the digital equalizer may be an adaptive digital equalizer, the digital canceller may be an adaptive digital canceller, and the DEDC ay include both the adaptive digital equalizer and the adaptive digital canceller (ADEC). In this case, the FA-MCC and the ADEC may reconstruct a representation-of-the-original-transmitted-signal (ROS), and feed the ROS to a slicer 133 that feeds a Physical Coding Sublayer (PCS 135) with the sliced symbols. The PCS 135 may extract a bitstream from the sliced symbols, and feed a link layer component that parses the sliced symbols into packets. Optionally the link layer component includes the retransmission module 136.

Usually, the parameters of the differential communication channel are not completely known, and the transceiver 130 operates at a first packet loss rate when there is no serious differential interference. From time to time, the differential communication channel suffers from the serious differential interference, and the serious differential interference increases the packet loss rate of the transceiver 130 to a second packet loss rate that is at least ten times, thousand times, and/or million times the first packet loss rate. Additionally or alternatively, the serious differential interference may be caused by mode-conversion of the common mode signal, and while suffering from an interference considered a serious differential interference, the transceiver does not meet its expected performance.

Optionally, the FA-MCC 132 converges within a short time, such that the retransmissions in response to the serious differential interference still enable the transceiver 130 to forward packets within a packet delay variation below 1 millisecond, or even below 50 microseconds. Additionally, responsive to receiving the indication that the serious differential interference has occurred, the FA-MCC 132 may increase its adaptation step size (ADSS) by at least 50% in order to rapidly mitigate the effect of the serious differential interference. Optionally, after mitigating the effect of the serious differential interference, the FA-MCC 132 may reduce its ADSS.

The elements used by the embodiments may be implemented in various ways. The analog front ends (such as the Rx-AFE, Tx-AFE, and CMS-AFE) may be implemented using analog elements and/or analog and digital elements. The buffers are implemented using memory to store the data, and processor to access the data over a communication channel, such as a parallel bus or a serial bus. Elements such as digital cancellers, equalizers, DBFs, FA-MCC, ADEC, DEDC, slicers, selectors, error generators, scramblers, PCS, link layer modules, retransmission modules, controllers, and/or rate controllers may be implemented utilizing a combination that includes one or more of the following hardware, firmware, and software elements: ASIC, FPGA, processors, memory blocks, discrete circuits, integrated circuits, at least one processor to execute commands stored in at least one memory block, a non-transitory computer-readable medium comprising computer-executable instructions that when executed on a computing device cause the computing device to perform certain operations, a processor and a computer readable storage medium comprising a program of instructions executable by the processor wherein when the instructions are executed the processor perform certain operations, a computer system comprising one or more processing units and memory storing one or more programs configured for execution by the one or more processors units wherein the one or more programs include instructions for certain operations, a system comprising a data processing apparatus and a non-transitory computer readable medium storing instructions executable by the data processing apparatus and that upon such execution cause the data processing apparatus to perform certain operations.

In this description, references to "one embodiment" mean that the feature being referred to may be included in at least one embodiment of the invention. Moreover, separate references to "one embodiment" or "some embodiments" in this description do not necessarily refer to the same embodiment. Additionally, references to "one embodiment" and "another embodiment" may not necessarily refer to different embodiments, but may be terms used, at times, to illustrate different aspects of an embodiment.

Individual blocks illustrated in the figures may be functional in nature and therefore may not necessarily correspond to discrete hardware elements. While the methods disclosed herein have been described and shown with reference to particular steps performed in a particular order, it is understood that these steps may be combined, sub-divided, and/or reordered without departing from the teachings of the embodiments, in accordance with the appended claims. Accordingly, unless specifically indicated herein, the order and grouping of the steps is not a limitation of the embodiments. Furthermore, methods and mechanisms of the embodiments will sometimes be described in singular form for clarity. However, some embodiments may include multiple iterations of a method or multiple instantiations of a mechanism unless noted otherwise. For example, when a processor is disclosed in one embodiment, the scope of the embodiment is intended to also cover the use of multiple processors.

## Claims

1. A communication system configured to utilize transmissions of known sequences to indicate quality of operating points of a first transceiver (401) and a second transceiver (402), comprising:
a first transceiver (401) configured to transmit a 1^{st} known sequence (411), for a 1^{st} duration, responsive to identifying a quality degradation in the operating point of the first transceiver (410) resulting from mode-conversion of common mode signals;
a second transceiver (402) configured to reply with a 2^{nd} known sequence (412), for a 2^{nd} duration, responsive to receiving the 1^{st} known sequence (411); wherein each of the 1^{st} and 2^{nd} durations is longer than round trip delay between the first and second transceivers;
wherein the first transceiver (401) comprises a mode conversion canceller (132) configured to utilize the 2^{nd} known sequence (412) to recover from the quality degradation in the operating point of the first transceiver (410) faster than the first transceiver could recover without receiving the 2^{nd} known sequence such that packet retransmissions made in response to the quality degradation still enable the first transceiver to forward packets within a packet delay variation below 1 millisecond.

2. The communication system of claim 1, wherein packet retransmissions made in response to the quality degradation still enable the first transceiver to forward packets within a packet delay variation below 50 microseconds.

3. The communication system of claim 1, wherein the first transceiver (401) is configured to transmit a 3^{rd} known sequence (413) after recovering from the quality degradation in its operating point.

4. The communication system of claim 3, wherein the first and second transceivers (401, 402) comprise first and second scramblers, respectively; the first scrambler is known to the second transceiver, the second scrambler is known to the first transceiver, and the 1^{st}, 2^{nd}, and 3^{rd} known sequences are different and are based on the first and second scramblers.

5. The communication system of claim 3, wherein the 1^{st} and 2^{nd} known sequences (411, 412) are bitwise-complement-code-words of idle sequences sent by the first and second transceivers, respectively.

6. The communication system of claim 5, wherein each bitwise-complement-code-word sent by either the first or second transceivers appears in corresponding idle sequence sent by either the first or second transceivers.

7. The communication system of claim 3, wherein the 3^{rd} known sequence (413) is the idle sequence sent by the first transceiver; and the second transceiver (402) is configured to start transmitting data only after receiving the 3^{rd} known sequence (413).

8. The communication system of claim 1, wherein the duration from identifying the quality degradation in the operating point of the first transceiver (410) to the initiation of the transmission of the 1^{st} known sequence (411) is shorter than the duration required for the first transceiver (401) to send a nominal data packet.

9. The communication system of claim 1, wherein both the 1^{st} and 2^{nd} durations are longer than 0.1 microseconds and shorter than 500 microseconds.

10. The communication system of claim 1, wherein both the 1^{st} and 2^{nd} durations are longer than 0.1 microseconds and shorter than 20 microseconds.

11. A method for utilizing transmission of known sequences to indicate qualities of operating points of first (401) and second (402) transceivers, comprising:
transmitting, by the first transceiver (401) upon identifying a quality degradation in the operating point of the first transceiver (410) resulting from mode-conversion of common mode signals, a 1^{st} known sequence (411) for a 1^{st} duration;
replying, by the second transceiver (402) upon receiving the 1^{st} known sequence, with a 2^{nd} known sequence (412) for a 2^{nd} duration; wherein each of the 1^{st} and 2^{nd} durations is longer than round trip delay between the first and second transceivers; and
utilizing, by a mode conversion canceller (132) of the first transceiver (401), the 2^{nd} known sequence (412) for recovering from the quality degradation in the operating point of the first transceiver (410) faster than the first transceiver could recover without receiving the 2^{nd} known sequence such that packet retransmissions made in response to the quality degradation still enable the first transceiver to forward packets within a packet delay variation below 1 millisecond.

12. The method of claim 11 wherein packet retransmissions made in response to the quality degradation still enable the first transceiver to forward packets within a packet delay variation below 50 microseconds.

13. The method of claim 11, further comprising transmitting, by the first transceiver (401), a 3^{rd} known sequence (413) after recovering from the quality degradation in its operating point.

## Patentansprüche

1. Kommunikationssystem, das konfiguriert ist, Übertragungen bekannter Folgen zu verwenden, um eine Qualität von Betriebspunkten eines ersten Sendeempfängers (401) und eines zweiten Sendeempfängers (402) anzugeben, und das Folgendes umfasst:
einen ersten Sendeempfänger (401), der konfiguriert ist, eine 1. bekannte Folge (411) für eine 1. Dauer als Reaktion auf das Identifizieren einer Qualitätsverschlechterung in dem Betriebspunkt des ersten Sendeempfängers (410), die sich aus einer Modus-Umwandlung von Gleichtaktsignalen ergibt, zu senden;
einen zweiten Sendeempfänger (402), der konfiguriert ist, mit einer 2. bekannten Folge (412) für eine 2. Dauer als Reaktion auf das Empfangen der 1. bekannten Folge (411) zu antworten; wobei jede der 1. und der 2. Dauer länger als eine Rundlaufverzögerung zwischen dem ersten und dem zweiten Sendeempfänger ist;
wobei der erste Sendeempfänger (401) einen Modus-Umwandlungsunterdrücker (132) umfasst, der konfiguriert ist, die 2. bekannte Folge (412) zu verwenden, um sich von der Qualitätsverschlechterung in dem Betriebspunkt des ersten Sendeempfängers (410) schneller zu erholen als sich der erste Sendeempfänger erholen könnte, ohne die 2. bekannte Folge zu empfangen, so dass Paketneuübertragungen, die als Reaktion auf die Qualitätsverschlechterung ausgeführt werden, dem ersten Sendeempfänger noch ermöglichen, Pakete innerhalb einer Paketverzögerungsvariation unter 1 Millisekunde weiterzuleiten.

2. Kommunikationssystem nach Anspruch 1, wobei Paketneuübertragungen, die als Reaktion auf die Qualitätsverschlechterung ausgeführt werden, dem ersten Sendeempfänger noch ermöglichen, Pakete innerhalb einer Paketverzögerungsvariationen unter 50 Millisekunden weiterzuleiten.

3. Kommunikationssystem nach Anspruch 1, wobei der erste Sendeempfänger (401) konfiguriert ist, eine 3. bekannte Folge (413) nach dem Erholen von der Qualitätsverschlechterung in seinem Betriebspunkt zu senden.

4. Kommunikationssystem nach Anspruch 3, wobei der erste und der zweite Sendeempfänger (401, 402) jeweils einen ersten und einen zweiten "Scrambler" umfassen; wobei der erste "Scrambler" dem zweiten Sendeempfänger bekannt ist, wobei der zweite "Scrambler" dem ersten Sendeempfänger bekannt ist, und die 1., 2. und 3. bekannte Folge verschieden sind und auf dem ersten und dem zweiten "Scrambler" beruhen.

5. Kommunikationssystem nach Anspruch 3, wobei die 1. und die 2. bekannte Folge (411, 412) Bitweise-ergänzende-Code-Wörter von Leerlauffolgen sind, die jeweils durch den ersten und den zweiten Sendeempfänger gesendet werden.

6. Kommunikationssystem nach Anspruch 5, wobei jedes Bitweise-ergänzende-Code-Wort, das entweder durch den ersten oder den zweiten Sendeempfänger gesendet wird, in einer entsprechenden Leerlauffolge erscheint, die entweder durch den ersten oder den zweiten Sendeempfänger gesendet wird.

7. Kommunikationssystem nach Anspruch 3, wobei die 3. bekannte Folge (413) eine Leerlauffolge ist, die durch den ersten Sendeempfänger gesendet wird; und der zweite Sendeempfänger (402) konfiguriert ist, das Senden von Daten nur nach dem Empfangen der 3. bekannten Folge (413) zu starten.

8. Kommunikationssystem nach Anspruch 1, wobei die Dauer ab dem Identifizieren der Qualitätsverschlechterung in dem Betriebspunkt des ersten Sendeempfängers (410) zum Einleiten der Übertragung der 1. bekannten Folge (411) kürzer als die Dauer ist, die für den ersten Sendeempfänger (401) benötigt wird, um ein nominales Datenpaket zu senden.

9. Kommunikationssystem nach Anspruch 1, wobei sowohl die 1. als auch die 2. Dauer länger als 0,1 Mikrosekunden und kürzer als 500 Mikrosekunden ist.

10. Kommunikationssystem nach Anspruch 1, wobei sowohl die 1. als auch die 2. Dauer länger als 0,1 Mikrosekunden und kürzer als 20 Mikrosekunden ist.

11. Verfahren zum Verwenden einer Übertragung von bekannten Folgen, um Qualitäten von Betriebspunkten eines ersten (401) und eines zweiten (402) Sendeempfängers anzugeben, das Folgendes umfasst:
Senden durch den ersten Sendeempfänger (401) bei Identifizieren einer Qualitätsverschlechterung in dem Betriebspunkt des ersten Sendeempfängers (410), die sich aus einer Modus-Umwandlung von Gleichtaktsignalen ergibt, einer 1. bekannten Folge (411) für eine 1. Dauer;
Antworten durch den zweiten Sendeempfänger (402) bei Empfangen der 1. bekannten Folge mit einer 2. bekannten Folge (412) für eine 2. Dauer; wobei jede der 1. und der 2. Dauer länger als eine Rundlaufverzögerung zwischen dem ersten und dem zweiten Sendeempfänger ist; und
Verwenden durch einen Modus-Umwandlungsunterdrücker (132) des ersten Sendeempfängers (401) der 2. bekannten Folge (412), um sich von der Qualitätsverschlechterung in dem Betriebspunkt des ersten Sendeempfängers (410) schneller zu erholen als sich der erste Sendeempfänger erholen könnte, ohne die 2. bekannte Folge zu empfangen, so dass Paketneuübertragungen, die als Reaktion auf die Qualitätsverschlechterung ausgeführt werden, dem ersten Sendeempfänger noch ermöglichen, Pakete innerhalb einer Paketverzögerungsvariation unter 1 Millisekunde weiterzuleiten.

12. Verfahren nach Anspruch 11, wobei die Paketneuübertragungen, die als Reaktion auf die Qualitätsverschlechterung ausgeführt werden, dem ersten Sendeempfänger noch ermöglichen, Pakete innerhalb einer Paketverzögerungsvariationen unter 50 Millisekunden weiterzuleiten.

13. Verfahren nach Anspruch 11, das ferner umfasst, durch den ersten Sendeempfänger (401) eine 3. bekannte Folge (413) nach dem Erholen von der Qualitätsverschlechterung in seinem Betriebspunkt zu senden.

## Revendications

1. Système de communication configuré pour utiliser des transmissions de séquences connues afin d'indiquer une qualité de points de fonctionnement d'un premier émetteur-récepteur (401) et d'un second émetteur-récepteur (402), comprenant :
un premier émetteur-récepteur (401) configuré pour transmettre une 1^{ère} séquence connue (411), pendant une 1^{ère} durée, en réponse à l'identification d'une dégradation de qualité du point de fonctionnement du premier émetteur-récepteur (410) résultant d'une conversion de mode de signaux de mode commun ;
un second émetteur-récepteur (402) configuré pour répondre avec une 2^{ème} séquence connue (412), pendant une 2^{ème} durée, en réponse à la réception de la 1^{ère} séquence connue (411) ; chacune des 1^{ère} et 2^{ème} durées étant plus longue qu'un temps de propagation aller-retour entre les premier et second émetteurs-récepteurs ;
dans lequel le premier émetteur-récepteur (401) comprend un dispositif d'annulation de conversion de mode (132) configuré pour utiliser la 2^{ème} séquence connue (412) afin de reprendre après la dégradation de qualité du point de fonctionnement du premier émetteur-récepteur (410) plus rapidement que le premier émetteur-récepteur pourrait reprendre sans recevoir la 2^{ème} séquence connue de telle sorte que des retransmissions de paquets réalisées en réponse à la dégradation de qualité permettent toujours au premier émetteur-récepteur d'acheminer des paquets en présence d'une variation de retard de paquet inférieure à 1 milliseconde.

2. Système de communication selon la revendication 1, dans lequel des retransmissions de paquets réalisées en réponse à la dégradation de qualité permettent toujours au premier émetteur-récepteur d'acheminer des paquets en présence d'une variation de retard de paquet inférieure à 50 microsecondes.

3. Système de communication selon la revendication 1, dans lequel le premier émetteur-récepteur (401) est configuré pour transmettre une 3^{ème} séquence connue (413) à sa reprise après la dégradation de qualité de son point de fonctionnement.

4. Système de communication selon la revendication 3, dans lequel les premier et second émetteurs-récepteurs (401, 402) comprennent des premier et second brouilleurs, respectivement ; le premier brouilleur est connu du second émetteur-récepteur, le second brouilleur est connu du premier émetteur-récepteur, et les 1^{ère}, 2^{ème}, et 3^{ème} séquences connues sont différentes et sont basées sur les premier et second brouilleurs.

5. Système de communication selon la revendication 3, dans lequel les 1^{ère} et 2^{ème} séquences connues (411, 412) sont des mots de code de complément de bits de séquences inactives envoyées par les premier et second émetteurs-récepteurs, respectivement.

6. Système de communication selon la revendication 5, dans lequel chaque mot de code de complément de bit envoyé par le premier ou par le second émetteur-récepteur apparaît dans une séquence inactive correspondante envoyée par le premier ou par le second émetteur-récepteur.

7. Système de communication selon la revendication 3, dans lequel la 3^{ème} séquence connue (413) est la séquence inactive envoyée par le premier émetteur-récepteur ; et le second émetteur-récepteur (402) est configuré pour lancer la transmission de données uniquement après la réception de la 3^{ème} séquence connue (413) .

8. Système de communication selon la revendication 1, dans lequel la durée entre l'identification de la dégradation de qualité du point de fonctionnement du premier émetteur-récepteur (410) et le lancement de la transmission de la 1^{ère} séquence connue (411) est plus courte que la durée requise pour l'envoi d'un paquet de données nominal par le premier émetteur-récepteur (401).

9. Système de communication selon la revendication 1, dans lequel les 1^{ère} et 2^{ème} durées sont toutes les deux supérieures à 0,1 microsecondes et inférieures à 500 microsecondes.

10. Système de communication selon la revendication 1, dans lequel les 1^{ère} et 2^{ème} durées sont toutes les deux supérieures à 0,1 microsecondes et inférieures à 20 microsecondes.

11. Procédé d'utilisation d'une transmission de séquences connues pour indiquer des qualités de points de fonctionnement de premier (401) and second (402) émetteurs-récepteurs, comprenant :
la transmission, par le premier émetteur-récepteur (401) à l'identification d'une dégradation de qualité du point de fonctionnement du premier émetteur-récepteur (410) résultant d'une conversion de mode de signaux de mode commun, d'une 1^{ère} séquence connue (411) pendant une 1^{ère} durée ;
la réponse, par le second émetteur-récepteur (402) à la réception de la 1^{ère} séquence connue, avec une 2^{ème} séquence connue (412) pendant une 2^{ème} durée ; chacune des 1^{ère} et 2^{ème} durées étant plus longue qu'un temps de propagation aller-retour entre les premier et second émetteurs-récepteurs ; et
l'utilisation, par un dispositif d'annulation de conversion de mode (132) du premier émetteur-récepteur (401) de la 2^{ème} séquence connue (412) afin de reprendre après la dégradation de qualité du point de fonctionnement du premier émetteur-récepteur (410) plus rapidement que le premier émetteur-récepteur pourrait reprendre sans recevoir la 2^{ème} séquence connue de telle sorte que des retransmissions de paquets réalisées en réponse à la dégradation de qualité permettent toujours au premier émetteur-récepteur d'acheminer des paquets en présence d'une variation de retard de paquet inférieure à 1 milliseconde.

12. Procédé selon la revendication 11 dans lequel des retransmissions de paquets réalisées en réponse à la dégradation de qualité permettent toujours au premier émetteur-récepteur d'acheminer des paquets en présence d'une variation de retard de paquet inférieure à 50 microsecondes.

13. Procédé selon la revendication 11, comprenant en outre la transmission, par le premier émetteur-récepteur (401), d'une 3^{ème} séquence connue (413) à sa reprise après la dégradation de qualité de son point de fonctionnement.
